Europäisches Patentamt

European Patent Office

Office européen des brevets

(11) Veröffentlichungsnummer: **0 027 254**

**A1**

# (12) EUROPÄISCHE PATENTANMELDUNG

(21) Anmeldenummer: 80106105.2

(22) Anmeldetag: 08.10.80

(51) Int. Cl.³: **G 01 R 31/36**
**H 02 J 9/06**

(30) Priorität: 13.10.79 DE 2941546

(43) Veröffentlichungstag der Anmeldung:
22.04.81 Patentblatt 81/16

(84) Benannte Vertragsstaaten:
AT BE CH FR GB IT LI LU NL

(71) Anmelder: NORKA Norddeutsche Kunststoff- und
Elektro-Gesellschaft Stäcker & Co.

D-3091 Hülsen(DE)

(72) Erfinder: Lingner, Heinz Dieter
Hespenweg 3
D-2817 Dörverden(DE)

(74) Vertreter: von Raffay, Vincenz, Dipl.-Ing. et al,
Patentanwälte Dipl.-Ing. Vincenz v. Raffay Dipl.-Chem.
Dr. Hans D. Boeters Postfach 32 32 17
D-2000 Hamburg 13(DE)

(54) Anordnung zur Selbstkontrolle von elektrischen Geräten und Anlagen, die zur Aufrechterhaltung ihrer Funktion bei Netzausfall wiederaufladbare Batterien enthalten.

(57) Anordnung zur Selbstkontrolle von elektrischen Geräten und Anlagen, die zur Aufrechterhaltung ihrer Funktion bei Netzausfall wiederaufladbare Batterien enthalten, wobei es möglichst rasch und ohne Schwierigkeiten erkennbar ist, ob ein Batteriefehler vorliegt. Ein Prüfungsgenerator, der zyklisch die Dauerladung der Batterien austastet, so daß die Versorgung des Gerätes oder der Anlage von der Batterie übernommen werden muß, ist mit einer Kippschaltung kombiniert, die die Steuerlogik in einem Äus-Zustand" festhält, sofern die Spannung unter einen vorgegebenen Grenzwert absinkt. Bei vorteilhafter Ausführungsform wird während des Austastvorganges zwar die Steuerlogik des Gerätes aus der Batterie versorgt, nicht aber der Verbraucher.

./...

Fig. 1

Elektrische Geräte und Anlagen, die zur Aufrechterhaltung
ihrer Funktion bei Netzausfall (Notbetrieb) wiederaufladbare Batterien beinhalten, stellen den Benutzer vor das
Problem, im normalen Betriebsablauf möglichst rasch zu
erkennen, wenn ein gravierender Batteriefehler entstanden
ist, durch den der Notbetrieb nicht mehr möglich ist.

Solche Fehler sind beispielsweise: Totalausfall der Batterie
durch Plattenschluß, durch Undichtigkeiten, durch abkorrodierte Anschlüsse, durch Diebstahl.

Eine Kontrolle auf solche Fehler ist üblicherweise nur
möglich, indem zumindest für kurze Zeit der Notbetrieb dieser Geräte ausgelöst wird, dadurch, daß die Netzspannung
abgeschaltet wird. Der dazu nötige Aufwand führt dazu, daß
solche Kontrollen nur relativ selten oder nie durchgeführt werden. Außerdem haben sie den Nachteil, daß bei jeder
Kontrolle die Batterien teilweise entladen werden, was
wiederum einen gewissen Verschleiß wegen der endlichen Zyklenfestigkeit der Batterien mit sich bringt.

Der Erfindung liegt daher die Aufgabe zugrunde, eine Anordnung nach dem Oberbegriff des Anspruches 1 zu schaffen,
bei der möglichst rasch und ohne die vorstehend geschilderten Schwierigkeiten erkennbar ist, ob ein Batteriefehler
vorliegt.

Diese Aufgabe wird durch das Kennzeichen des Anspruches 1
gelöst.

Bei vorhandener Netzspannung sorgt üblicherweise eine Gleichspannungsversorgung in Gerät oder Anlage sowohl für die
korrekte Dauerladung der Batterien als auch für die interne
Betriebsspannung der Steuerlogik des Gerätes oder der Anlage. Zum Erreichen der Kontrollfunktion kommt nun ein
Generator zum Einsatz, der periodisch die Erhaltungsladung der Batterie für kurze Zeit austastet, wodurch die interne Versorgung der Steuerlogik des Gerätes oder der Anlage von der Batterie übernommen werden muß, nicht jedoch die Versorgung des Verbrauchers. Der Verbraucher wird weiterhin vom Netz gespeist. Bricht nun die Versorgungsspannung der Steuerlogik während der Austastung unter einen vorgegebenem Wert zusammen, weil beispielsweise die Batterieanschlüsse abkorrodiert sind, so sorgt eine Kippschaltung dafür, daß die Dauerladung unterbrochen bleibt.

Nachfolgend kann dieser Zustand ausgenutzt werden, um eine Bereitschaftsanzeige erlöschen zu lassen, eine Alarmmeldung abzugeben oder auch den Verbraucher abzuschalten.

Der Vorteil dieser Anordnung liegt darin, daß der Prüfvorgang in relativ kurzen Zeitabständen (z.B. 1 Sek.) für wenige Millisekunden erfolgen kann, ohne daß dadurch die Batterie durch nennenswerte Stromentnahme verschlissen wird.

Weitere Vorteile und Einzelheiten der Erfindung werden im folgenden unter Hinweis auf die Zeichnung anhand zweier Ausführungsbeispiele näher erläutert.

Es zeigt:

Fig. 1   ein Blockschaltbild einer Ausführungsform der Erfindung am Beispiel einer Einzelbatterie-Sicherheitsleuchte; und

Fig. 2   ein Teilschaltbild einer anderen Ausführungsform nach der Erfindung, das insoweit dargestellt ist, wie es in Verbindung mit der Erfindung erforderlich ist.

Aus der Netzspannung wird bei der Schaltung nach Fig. 1
über den Transformator TR und die Gleichrichtereinheit
GL eine gesiebte Versorgungs-Gleichspannung gewonnen.
Mit dieser Gleichspannung wird über den Lastschalter LS 1
der Wechselrichter TWR zum Betrieb der Lampe versorgt;
weiterhin der Laderegler LR und die Kippschaltung KS. Der
Laderegler LR versorgt die Batterie B, die Steuerlogik Stl
und den Prüfgenerator PG. Die Kippschaltung KS benutzt
die Höhe der Versorgungsspannung der Steuerlogik als Eingangssignal. Bei Netzausfall (Notbetrieb) wird der Wechselrichter TWR über LS 2 aus der Batterie versorgt. Der
Prüfgenerator PG erzeugt im Takt von ca. 1 sec. einen Austastimpuls für den Laderegler. Während dieses Impulses
setzt die Erhaltungsladung der Batterie aus. Die Kippschaltung
überprüft aber ständig die Höhe der Versorgungsspannung
für die Steuerlogik. Sinkt diese Spannung nun unter einen
vorgegebenen Wert, z.B. durch Unterbrechung der Batterieleitung, so hält die Kippschaltung von sich aus den Laderegler dauernd zugetastet. Damit verliert aber die Steuerlogik dauernd ihre Versorgungsspannung und kann die
Lastschalter nicht mehr aussteuern. Als Folge davon geht
die Lampe aus, was wiederum den Benutzer der Leuchte zwingt,
diese zu überprüfen.

Weiterhin läßt sich z.B. eine Kontrollampe an die Versorgungsspannung der Steuerlogik legen, die im oben beschriebenen
Fehlerzustand verlöschen würde.

In der Schaltung nach Fig. 2 stellt der Unijunction-Transistor
UJT1, welcher als freilaufender Impulsgenerator beschaltet
ist, den Prüfgenerator dar. Ihm werden am Anschluß B2
negative Impulse von einigen hundert Mikrosek. Länge und
einer Folgefrequenz von ca. 1 Hz entnommen, die den Ausgang
des Ladereglers RV1 über ZD1 und R1 zutasten. Der Laderegler selbst ist mit C2 frequenzkompensiert. Das führt dazu, daß die von UJT1 erzeugte Austastlücke eine Länge von einigen msec. erreicht. Wenn während dieser Zeit die Batterie nicht die Versorgungsspannung UB aufrechterhält, wird dem Transistor T1 über D1 und R2 eine Spannung zugeführt, die negativer ist als die im Laderegler erzeugte Referenzspannung U Ref. Dadurch öffnet T1 und führt dem Differenzverstärker am -Eingang eine Spannung zu, die auf jeden Fall höher ist als der Sollwert am +Eingang. Das wiederum führt dazu, daß der Regelverstärker dauerhaft zugetastet bleibt. T1 stellt im Zusammenwirken mit RV1 also die Kippschaltung dar.

Aus dem Schaltbild ist ferner zu erkennen, daß im gekippten Zustand auch die Steuerlogik St1 keine Versorgungsspannung mehr erhält. Damit ist sie nicht mehr in der Lage, die Lastschalter LS zu betreiben. Als Folge davon geht die am Wechselrichter TWR angeschlossene Lampe aus.

**RAFFAY & BOETERS**

P A T E N T A N W Ä L T E

POSTFACH 32 3217
D-2000 HAMBURG 13

**0027254**

DIPL.-ING. VINCENZ v. RAFFAY
HAMBURG

DIPL.-CHEM. DR. HANS D. BOETERS
MÜNCHEN

KANZLEI:
GEFFCKENSTRASSE 6
TELEFON: (040) 47 80 23
TELEGRAMME: PATFAY, HAMBURG

6. Okt. 1980

NORKA
Norddeutsche Kunststoff- und
Elektro-Gesellschaft
Stäcker & Co.

3091 Hülsen

UNSERE AKTE: 1219/2 5

Anordnung zur Selbstkontrolle von elektrischen
Geräten und Anlagen, die zur Aufrechterhaltung
ihrer Funktion bei Netzausfall wiederaufladbare
Batterien enthalten.

## Patentansprüche

1. Anordnung zur Selbstkontrolle von elektrischen Geräten
und Anlagen, die zur Aufrechterhaltung ihrer Funktion
bei Netzausfall wiederaufladbare Batterien enthalten,
gekennzeichnet durch die Kombination eines Prüfgenerators,
welcher zyklisch die Dauerladung der Batterien austastet,
so daß die Versorgung des Gerätes oder der Anlage von
der Batterie übernommen werden muß, mit einer Kippschaltung, die die Steuerlogik in einem "Aus-Zustand" festhält, sofern die Spannung unter einen vorgegebenen Grenzwert
abgesunken ist.

2. Anordnung nach Anspruch 1, dadurch gekennzeichnet, daß
während des Austastvorganges zwar die Steuerlogik des
Gerätes aus der Batterie versorgt wird, nicht aber der
Verbraucher.

3. Anordnung nach Anspruch 1 und 2, dadurch gekennzeichnet, daß es sich bei dem Prüfgenerator um einen als Oszillator beschalteten UJT-Transistor handelt.

4. Anordnung nach Anspruch 1, dadurch gekennzeichnet, daß die Kippschaltung gebildet wird durch einen Transistor, der bei zu niedriger Spannung geöffnet wird und dann dem Regelverstärker einen zu hohen Istwert der Spannung vortäuscht.

5. Anordnung nach Anspruch 1 und 4, dadurch gekennzeichnet, daß die Kippschaltung von einer Spannung versorgt wird, die von der Versorgungsspannung der Steuerlogik unabhängig ist.

Beschreibung:

Fig. 1

Fig. 2

2/2

0027254

Europäisches
Patentamt

**EUROPÄISCHER RECHERCHENBERICHT**

**0027254**
Nummer der Anmeldung

EP 80 10 6105

| Kategorie | EINSCHLÄGIGE DOKUMENTE | | betrifft Anspruch | KLASSIFIKATION DER ANMELDUNG (Int. Cl.³) |
|---|---|---|---|---|
| | Kennzeichnung des Dokuments mit Angabe, soweit erforderlich, der maßgeblichen Teile | | | |
| | <u>DE - A - 2 648 380</u> (H. UNRUH)<br><br>* Insgesamt *<br><br>-- | | 1 | G 01 R 31/36<br>H 02 J 9/06 |
| | <u>FR - A - 2 196 479</u> (R. DE VAULX)<br><br>* Seite 1, Zeilen 18-31; Seite 4, Zeile 35 - Seite 9, Zeile 25; Figuren 2-4 *<br><br>-- | | 1 | |
| E,P | <u>FR - A - 2 427 609</u> (ELECTRICITE DE FRANCE)<br><br>* Seite 2, Zeile 24 - Seite 3, Zeile 11; Seite 3, Zeile 40 - Seite 6, Zeile 20; Figur *<br><br>-- | | 1 | RECHERCHIERTE SACHGEBIETE (Int. Cl.³)<br><br>G 01 R 31/36<br>H 02 J  9/06<br>                 9/04<br>                 9/02<br>                 7/10<br>H 02 H  7/18 |
| P | <u>DE - A - 2 821 149</u> (BROWN, BOVERI & CIE.)<br><br>* Seite 3, Zeilen 1-15; Seite 4, Zeilen 13-22; Seite 5, Zeile 24 - Seite 7, Zeile 13; Figuren 1,2 *<br><br>-- | | 1 | |
| A | <u>DE - A - 2 534 165</u> (LICENTIA)<br><br>* Seite 1, Zeilen 1-4; Seite 4, Zeile 17 - Seite 6, Zeile 17; Figur *<br><br>---- | | 1 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |

Der vorliegende Recherchenbericht wurde für alle Patentansprüche erstellt.

&: Mitglied der gleichen Patentfamilie, übereinstimmendes Dokument

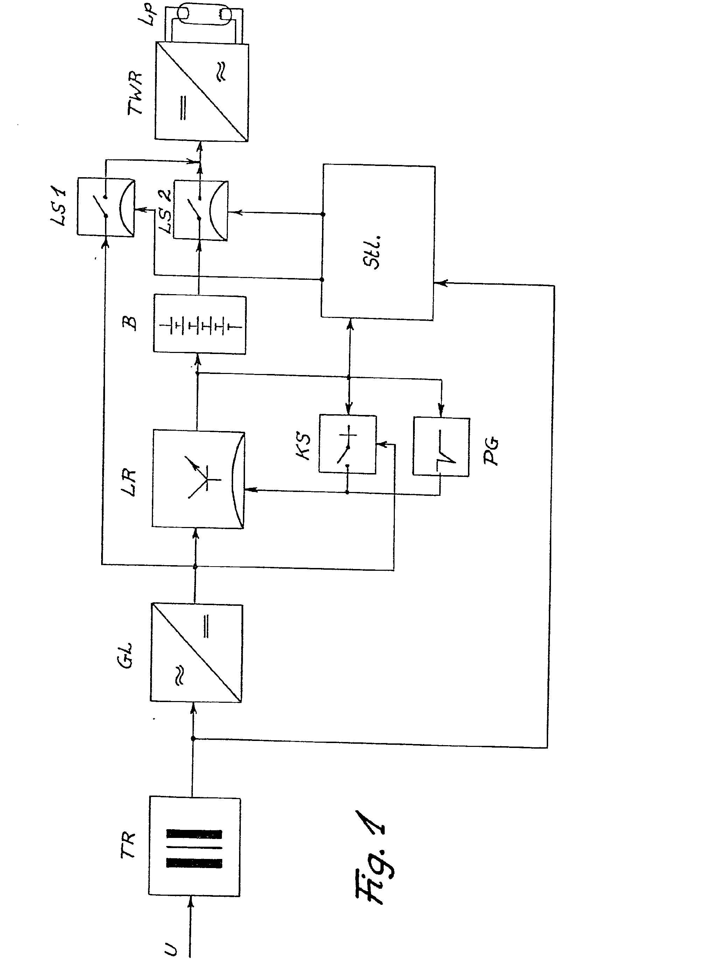

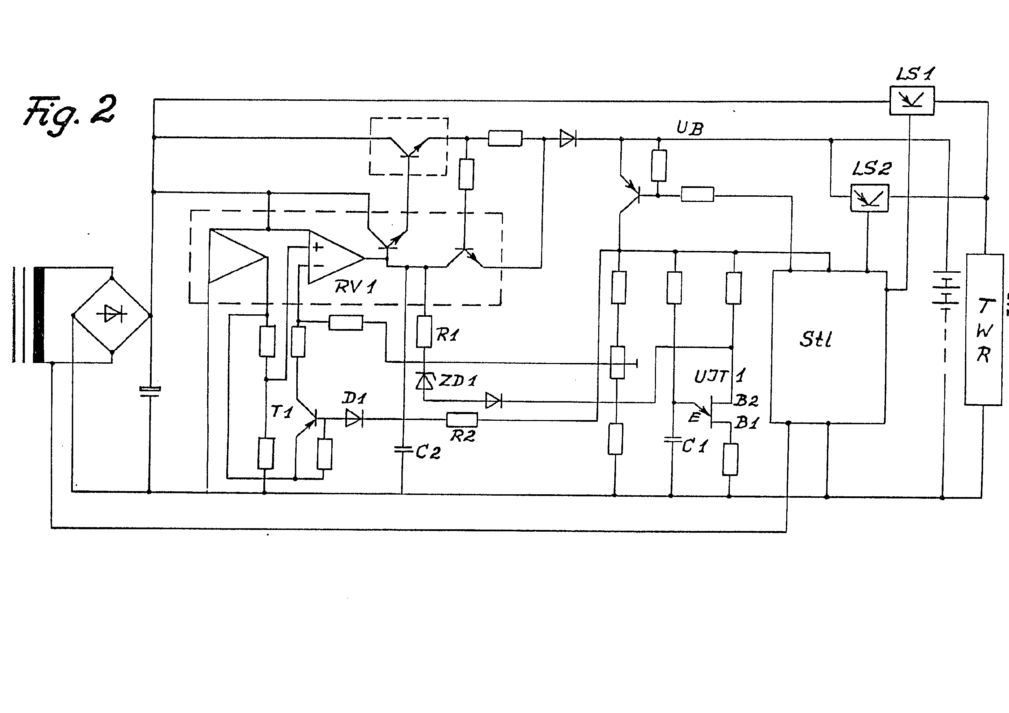

| Recherchenort | Abschlußdatum der Recherche | Prüfer |
|---|---|---|
| Den Haag | 14-01-1981 | POINT |